# EUROPÄISCHE PATENTSCHRIFT

(11) **EP 4 448 351 B1**
(45) Veröffentlichungstag und Bekanntmachung des Hinweises auf die Patenterteilung: **25.02.2026**
(21) Anmeldenummer: 22851017.8
(22) Anmeldetag: 05.12.2022
(51) Int. Cl.: B60T 7/04, B60T 8/40, B60T 13/14, B60T 13/74, B60T 17/02

(54) **BREMSANLAGE FÜR EIN KRAFTFAHRZEUG**
BRAKE SYSTEM FOR VEHICLE
SYSTÈME DE FREINAGE POUR VÉHICULE

(30) Priorität: 14.12.2021 DE 102021214332
(43) Veröffentlichungstag der Anmeldung: 23.10.2024
(73) Patentinhaber: AUMOVIO Germany GmbH, 60488 Frankfurt am Main (DE)
(72) Erfinder: COURTH, Christian, 30175 Hannover (DE); BILLER, Harald, 30175 Hannover (DE); HITZEL, Michael, 30175 Hannover (DE)
(74) Vertreter: Aumovio Corporation
(86) Internationale Anmeldenummer: PCT/DE2022/200289
(87) Internationale Veröffentlichungsnummer: WO 2023/110030

(56) Entgegenhaltungen:
- DE-A1- 102014 217 428
- DE-A1- 102018 214 564
- DE-A1- 102018 222 478

## Beschreibung

Die Erfindung betrifft eine Bremsanlage für ein Kraftfahrzeug für zumindest vier hydraulisch betätigbare Radbremsen mit einer ersten elektrisch betätigbaren Druckquelle, einer zweiten elektrisch betätigbaren Druckquelle, einem elektrisch betätigbaren Einlassventil je Radbremse, einem elektrisch betätigbaren Auslassventil je Radbremse und einem Druckmittelvorratsbehälter.

Aus der WO 2018/130483 A1 ist eine Bremsanlage mit zwei elektrisch steuerbaren Druckquellen für ein Kraftfahrzeug mit vier hydraulisch betätigbaren Radbremsen bekannt. Die Bremsanlage umfasst neben radindividuellen elektrisch ansteuerbaren Einlass- und Auslassventilen ein elektrisch ansteuerbares Kreistrennventil sowie zumindest weitere drei elektrisch ansteuerbare Ventile. Die genannten Komponenten sind gemeinsam in einer einzigen Baueinheit angeordnet. Weiterhin sind zwei elektronische Steuer- und Regeleinheiten vorgesehen, wobei eine der elektronischen Steuer- und Regeleinheiten die zweite Druckquelle sowie die Einlass- und Auslassventile ansteuert, während die erste Druckquelle sowie alle übrigen Ventile von der anderen elektronische Steuer- und Regeleinheit angesteuert werden.

In der DE 10 2018 222 478 A1 wird eine Bremsanlage offenbart, welche zwei elektrisch steuerbare Druckquellen sowie einen bremspedalbetätigbaren Hauptbremszylinder, radindividuelle elektrisch ansteuerbare Einlass- und Auslassventile, ein elektrisch ansteuerbares Kreistrennventil, ein elektrisch ansteuerbares Pumpenventil für die zweite elektrisch steuerbare Druckquelle sowie ein stromlos geschlossenes Zuschaltventil für die erste elektrisch steuerbare Druckquelle umfasst. Dabei sind die zweite elektrisch steuerbare Druckquelle, das ihr zugeordnete Pumpenventil und die Einlass- und Auslassventile in einem ersten Modul und der Hauptbremszylinder mit zugeordnetem Fahrertrennventil und Simulator, die erste elektrisch steuerbare Druckquelle, das ihr zugeordnete stromlos geschlossene Zuschaltventil und das Kreistrennventil in einem zweiten Modul angeordnet.

In der DE 10 2018 214564 A1 wird ein Bremssystem offenbart, mit einem Hauptbremszylinder und einer ersten und einer zweiten Pumpe, welche ausgangsseitig mit Radventilen verbunden sind. Die erste Pumpe ist eingangsseitig mi dem Hauptbremszylinder verbunden und die zweite Pumpe mit dem Reservoir. Die zweite Pumpe kann dadurch Bremsflüssigkeit aus diesem Reservoir ansaugen.

In der DE 10 2014 217428 A1 wird ein Hydraulikaggregat für ein Bremssystem beschrieben, wobei die Zuführleitung eines Radbremszylinders an eine erste Druckkammer eines Hauptbremszylinders angebunden ist und dessen Saugleitungsabschnitt an ein Bremsflüssigkeitsreservoir angebunden ist. Die Zuführleitung und der Saugleitungsabschnitt sind über ein Simulatorventil hydraulisch verbunden, sodass Bremsflüssigkeit von der Zuführleitung in den Saugleitungsabschnitt transferierbar ist. Dadurch kann mittels des Simulatorventils ein in der ersten Druckkammer vorliegender Innendruck reduziert werden.

Es ist eine Aufgabe der vorliegenden Erfindung, eine verbesserte, für das hochautomatisierte Fahren geeignete Bremsanlage bereitzustellen, welche insbesondere die für das hochautomatisierte Fahren notwendige, möglichst hohe Verfügbarkeit bietet.

Eine weitere Aufgabe der Erfindung ist es, die Kosten für die Herstellung und den Zusammenbau der Bremsanlage möglichst gering zu halten.

Diese Aufgabe wird erfindungsgemäß durch eine Bremsanlage gemäß Anspruch 1 gelöst.

Der Erfindung liegt der Gedanke zugrunde, dass die Bremsanlage eine erste Baueinheit, in welcher eine erste elektrisch betätigbare Druckquelle angeordnet ist, eine zweite Baueinheit, in welcher eine zweite elektrisch betätigbare Druckquelle, ein elektrisch betätigbares Einlassventil je Radbremse und ein elektrisch betätigbares Auslassventil je Radbremse angeordnet ist, und einen Druckmittelvorratsbehälter umfasst, wobei die erste Druckquelle sowie die zweite Druckquelle mit einer Bremsversorgungsleitung verbunden sind, an welche die zumindest vier Einlassventile angeschlossen sind, und wobei die erste Baueinheit und die zweite Baueinheit durch höchstens ein druckfestes hydraulisches Verbindungselement miteinander verbunden sind.

Weitere nicht-druckfeste Verbindungselemente zwischen erster und zweiter Baueinheit sind möglich.

Bevorzugt wird unter einem druckfesten Verbindungselement bzw. einer druckfesten An-Verbindung verstanden, dass das Verbindungselement bzw. die An-/Verbindung auf einen maximalen Betriebsdruck einer der Druckquellen, insbesondere der ersten Druckquelle, und/oder der Radbremsen ausgelegt ist. Besonders bevorzugt ist das druckfeste Verbindungselement bzw. die druckfeste An-/Verbindung auf einen Druck von etwa 180-220 bar ausgelegt. Ganz besonders bevorzugt ist das druckfeste Verbindungselement bzw. die druckfeste An-/Verbindung auf einen Druck von etwa 200 bar ausgelegt.

Bevorzugt wird unter einem nicht-druckfesten Verbindungselement bzw. einer nicht-druckfesten An-/Verbindung verstanden, dass das Verbindungselement bzw. die An-Nerbindung nicht auf den maximalen Betriebsdruck der Radbremsen ausgelegt ist. Besonders bevorzugt ist ein nicht-druckfestes Verbindungselement bzw. eine nicht-druckfeste An-/Verbindung auf einen maximalen Druck von etwa 10 bar ausgelegt.

Die erste Baueinheit und die zweite Baueinheit sind derart ausgeführt, dass sie durch höchstens ein druckfestes hydraulisches Verbindungselement miteinander verbunden sind. Die erste Baueinheit und die zweite Baueinheit können durch mehrere hydraulische Verbindungselemente miteinander verbunden sein, jedoch ist höchstens eines - im Sinne von nur eines - dieser hydraulischen Verbindungselemente druckfest ausgeführt, nämlich das druckfeste hydraulische Verbindungselement. Eventuelle andere hydraulische Verbindungselemente sind nicht druckfest ausgeführt.

Bevorzugt sind die erste Baueinheit und die zweite Baueinheit durch lediglich ein hydraulisches Verbindungselement miteinander verbunden, wobei dieses Verbindungselement druckfest ausgeführt ist, d.h. das druckfeste hydraulische Verbindungselement ist. Weitere, nicht-druckfeste Verbindungselemente, vorteilhafterweise zwischen der zweite Baueinheit und dem Druckmittelvorratsbehälter, sind möglich.

Bevorzugt ist der Druckmittelvorratsbehälter an der ersten Baueinheit angeordnet.

Bevorzugt handelt es sich um einen unter Atmosphärendruck stehenden Druckmittelvorratsbehälter.

Die Bremsanlage umfasst pro Radbremse ein Einlassventil sowie ein Auslassventil. Je Radbremse ist bevorzugt das Einlassventil hydraulisch zwischen der Bremsversorgungsleitung und der zugeordneten Radbremse angeordnet and das Auslassventil hydraulisch zwischen der zugeordneten Radbremse und dem Druckmittelvorratsbehälter angeordnet. Die Ein- und Auslassventile dienen zum bedarfsweisen Einstellen radindividueller Bremsdrücke, die aus dem Bremsversorgungsdruck in der Bremsversorgungsleitung abgeleitet werden.

Bevorzugt leiten die Einlassventile den Bremsversorgungsdruck im nicht-angesteuerten Zustand zu den Radbremsen weiter (d.h. bevorzugt stromlos offene Einlassventile), die Auslassventile sperren im nicht-angesteuerten Zustand ein Abströmen von Druckmittel aus den Radbremsen (d.h. bevorzugt stromlos geschlossene Einlassventile).

Bevorzugt sind die Auslassventile über eine gemeinsame hydraulische Verbindung (sog. Rücklaufleitung) mit dem Druckmittelvorratsbehälter verbunden. Besonders bevorzugt ist die zweite Druckquelle mit ihrem Sauganschluss (Saugseite oder ggf. ihren Saugseiten) mit der Rücklaufleitung hydraulisch verbunden. So ist ein einziges nicht-druckfestes Verbindungselement zwischen zweiter Baueinheit und Druckmittelvorratsbehälter möglich.

Bevorzugt ist die erste Druckquelle über ein elektrisch betätigbares, erstes Trennventil mit der Bremsversorgungsleitung verbunden, wobei das erste Trennventil in der zweiten Baueinheit angeordnet ist. Besonders bevorzugt ist das erste Trennventil stromlos offen ausgeführt. Durch Schließen des ersten Trennventils kann, z.B. im Fall einer Leckage in der ersten Baueinheit, ein Abfließen von Druckmittel von der zweiten Baueinheit über das druckfeste hydraulische Verbindungselement in die erste Baueinheit verhindert werden. Auch kann die erste Baueinheit mittels des ersten Trennventils hydraulisch von der Bremsversorgungsleitung getrennt werden, z.B. wenn die Bremsanlage in einer Betriebsart betrieben werden soll oder muss (z.B. bei einem elektrischen Ausfall der ersten Baueinheit), in welcher die zumindest vier Radbremsen mittels der zweiten Druckquelle mit Druck beaufschlagt werden.

Alternativ ist es bevorzugt, dass das erste Trennventil in der ersten Baueinheit angeordnet ist und stromlos geschlossen ausgeführt ist. So kann im Fall einer Leckage in der ersten Druckquelle durch Schließen des ersten Trennventils ein Abfließen von Druckmittel aus der ersten Druckquelle verhindert werden.

Alternativ ist es bevorzugt, dass die erste Druckquelle ohne Zwischenschaltung eines elektrisch betätigbaren Ventils mit der Bremsversorgungsleitung verbunden ist.

Besonders bevorzugt ist dem ersten Trennventil ein in Richtung der Bremsversorgungsleitung öffnendes Rückschlagventil parallelgeschaltet, wobei das Rückschlagventil vorteilhafterweise in der zweiten Baueinheit angeordnet ist.

Zusätzlich oder alternativ ist es besonders bevorzugt, dass dem ersten Trennventil ein elektrisch betätigbares, insbesondere stromlos geschlossenes, drittes Trennventil parallelgeschaltet ist, wobei das dritte Trennventil insbesondere in der zweiten Baueinheit angeordnet ist.

Die erste Druckquelle ist weiterhin bevorzugt über ein elektrisch betätigbares zweites Trennventil mit dem Druckmittelvorratsbehälter verbunden, wobei das zweite Trennventil in der ersten Baueinheit angeordnet ist. Besonders bevorzugt ist das zweite Trennventil stromlos offen ausgeführt. Über das zweite Trennventil ist z.B. im stromlosen Zustand der Bremsanlage ein Abfließen von Druckmittel aus den Radbremsen in den Druckmittelvorratsbehälter möglich, was zur Sicherstellung der Drucklosigkeit der Radbremsen (Abbau von Restbremsmomenten), z.B. bei abgestelltem Fahrzeug, vorteilhaft ist.

Besonders bevorzugt ist dem zweiten Trennventil ein in Richtung der ersten Druckquelle öffnendes Rückschlagventil parallelgeschaltet.

Zusätzlich ist die erste Druckquelle bevorzugt, insbesondere zum Nachsaugen von Druckmittel, über ein in Richtung der ersten Druckquelle öffnendes Rückschlagventil mit dem Druckmittelvorratsbehälter verbunden.

Bevorzugt ist ein elektrisch betätigbares Kreistrennventil in der Bremsversorgungsleitung derart angeordnet, dass bei geschlossenem Kreistrennventil die Bremsversorgungsleitung in einen ersten Leitungsabschnitt und einen zweiten Leitungsabschnitt hydraulisch getrennt wird. Dabei ist der erste Leitungsabschnitt mit der zweiten Druckquelle und zumindest zwei der zumindest vier Einlassventilen hydraulisch verbunden, bzw. der erste Leitungsabschnitt verbindet die zweite Druckquelle mit zumindest zwei der zumindest vier Einlassventilen hydraulisch. Weiterhin ist der zweite Leitungsabschnitt mit der ersten Druckquelle und den anderen, insbesondere zumindest zwei, der zumindest vier Einlassventilen hydraulisch verbunden, bzw. der zweite Leitungsabschnitt verbindet die ersten Druckquelle mit den anderen, insbesondere zumindest zwei, der zumindest vier Einlassventilen hydraulisch. Dabei ist das Kreistrennventil in der zweiten Baueinheit angeordnet. Mittels des Kreistrennventils kann die Bremsanlage in zwei Bremskreise aufgetrennt oder aufgeteilt werden. Dabei ist in dem einen (ersten) Bremskreis die zweite Druckquelle mit den zumindest zwei der zumindest vier Einlassventilen hydraulisch verbunden, und in dem anderen (zweiten) Bremskreis ist die erste Druckquelle mit den anderen Einlassventilen der zumindest vier Einlassventilen hydraulisch verbunden. Ein einer kombinierten Betriebsart können so die Radbremsen, welche dem ersten Bremskreis zugeordnet sind, mittels der zweiten Druckquelle betätigt werden, während die Radbremsen, welche dem zweiten Bremskreis zugeordnet sind, mittels der ersten Druckquelle betätigt werden.

Besonders bevorzugt ist das Kreistrennventil stromlos offen ausgeführt, so dass im Normalbremsbetrieb, wenn die zumindest vier Radbremsen mittels der ersten Druckquelle mit Druck beaufschlagt werden, oder auch in einer Betriebsart, wenn die zumindest vier Radbremsen mittels der zweiten Druckquelle mit Druck beaufschlagt werden, keine Ansteuerung des Kreistrennventil nötig ist. Dies reduziert den Stromverbrauch der Bremsanlage und vermeidet eventuell störende Ventilschaltgeräusche.

Die erste Baueinheit umfasst bevorzugt zumindest einen ersten hydraulischen Anschluss zur Verbindung mit dem Druckmittelvorratsbehälter und einen zweiten hydraulischen Anschluss zur Verbindung mit der zweiten Baueinheit, wobei der zweite hydraulische Anschluss mit dem druckfesten hydraulischen Verbindungselement verbunden ist. Entsprechend muss der zweite hydraulische Anschluss für eine druckfeste Verbindung ausgebildet sein. Der erste hydraulische Anschluss muss nur für eine drucklose (Atmosphären-) bzw. nicht-druckfeste Anbindung ausgebildet sein.

Besonders bevorzugt umfasst die erste Baueinheit neben dem ersten und dem zweiten hydraulischen Anschluss keinen weiteren hydraulischen Anschluss.

Besonders bevorzugt ist die erste Druckquelle, insbesondere zum Nachsaugen von Druckmittel, insbesondere über ein in Richtung der ersten Druckquelle öffnendes Rückschlagventil, mit dem ersten hydraulischen Anschluss verbunden, und die erste Druckquelle ist, insbesondere zum Betätigen der zumindest vier Radbremsen, mit dem zweiten hydraulischen Anschluss verbunden.

Gemäß einer bevorzugten Weiterbildung der Erfindung umfasst die zweite Baueinheit zumindest vier hydraulische Radanschlüsse zur Verbindung mit den Radbremsen, einen ersten hydraulischen Anschluss zur Verbindung mit dem Druckmittelvorratsbehälter und einen zweiten hydraulischen Anschluss zur Verbindung mit der ersten Baueinheit, wobei der zweite hydraulische Anschluss mit dem druckfesten hydraulischen Verbindungselement verbunden ist. Entsprechend ist der zweite hydraulische Anschluss der zweiten Baueinheit für eine druckfeste Verbindung ausgebildet. Zur Betätigung der Radbremsen sind auch die Radanschlüsse der zweiten Baueinheit für eine druckfeste Verbindung ausgebildet. Wohingegen der erste hydraulische Anschluss der zweiten Baueinheit nur für eine drucklose (Atmosphären-) bzw. nicht-druckfeste Anbindung ausgebildet sein muss.

Bevorzugt umfasst die zweite Baueinheit keinen weiteren hydraulischen Anschluss neben den Radanschlüssen und dem ersten (nicht-druckfesten) und dem zweiten (druckfesten) Anschluss.

Gemäß einer bevorzugten Weiterbildung der Erfindung sind der erste hydraulische Anschluss der ersten Baueinheit und der erste hydraulische Anschluss der zweiten Baueinheit mit unterschiedlichen Kammern des Druckmittelvorratsbehälters verbunden. So ist eine (zumindest teilweise) Trennung der Druckmittelvorräte für die ersten Baueinheit bzw. erste Druckquelle sowie die zweite Baueinheit bzw. zweite Druckquelle gewährleistet. So wird eine erhöhte Verfügbarkeit der Bremsanlage im Falle einer Leckage erreicht.

Bevorzugt ist die zweite Druckquelle saugseitig ohne Zwischenschaltung eines elektrisch betätigbaren Ventils mit dem Druckmittelvorratsbehälter verbunden. So kann ein möglichst geringer Ansaugwiderstand für die zweite Druckquelle erzielt werden.

Bevorzugt ist die zweite Druckquelle saugseitig ohne Zwischenschaltung eines elektrisch betätigbaren Ventils, über den ersten hydraulischen Anschluss der zweiten Baueinheit und eine mit dem ersten hydraulischen Anschluss verbundene hydraulische Verbindungsleitung mit dem Druckmittelvorratsbehälter verbunden. Besonders bevorzugt führt die hydraulische Verbindungsleitung nicht durch die erste Baueinheit. Die hydraulische Verbindungsleitung zwischen der zweiten Baueinheit und dem Druckmittelvorratsbehälter braucht nicht druckfest ausgeführt sein. Die hydraulische Verbindungsleitung zwischen der zweiten Baueinheit und dem Druckmittelvorratsbehälter besitzt vorteilhafterweise einen größeren Durchmesser als das druckfeste hydraulische Verbindungselement zwischen erster und zweiter Baueinheit.

Besonders bevorzugt ist die zweite Druckquelle saugseitig ohne Zwischenschaltung eines Ventils mit dem Druckmittelvorratsbehälter verbunden.

Bevorzugt umfasst die Bremsanlage neben der ersten und der zweiten elektrisch betätigbaren Druckquelle kein weitere Druckquelle zum Aufbau eines Bremsdruckes zur Betätigung der Radbremsen. Besonders bevorzugt umfasst die Bremsanlage weder eine weitere elektrisch betätigbare Druckquelle noch eine Fahrer-betätigbare Druckquelle, wie z.B. einen Hauptbremszylinder, welche mit zumindest einer der Radbremsen zu deren Betätigung wirkverbunden ist, z.B. hydraulisch oder mechanisch verbunden ist.

Gemäß einer bevorzugten Weiterbildung der Erfindung umfasst die Bremsanlage eine erste elektronische Steuervorrichtung, welche der ersten Baueinheit zugeordnet ist, besonders bevorzugt Teil der ersten Baueinheit ist, und welche die in der ersten Baueinheit angeordneten elektrischen Komponenten (z.B. die erste Druckquelle und das zweite Trennventil) ansteuert. Bevorzugten umfasst die Bremsanlage weiter eine zweite elektronische Steuervorrichtung, welche der zweiten Baueinheit zugeordnet ist, besonders bevorzugt Teil der zweiten Baueinheit ist, und welche die in der zweiten Baueinheit angeordneten elektrischen Komponenten (z.B. die zweite Druckquelle, die Einlass- und Auslassventile, das erste Trennventil und das Kreistrennventil) ansteuert.

Gemäß einer bevorzugten Weiterbildung der Erfindung umfasst die erste Baueinheit eine erste elektronische Steuervorrichtung, welche die erste Druckquelle ansteuert.

Bevorzugt wird das zweite Trennventil von der ersten elektronischen Steuervorrichtung angesteuert. So kann das zweite Trennventil mittels der ersten elektronischen Steuervorrichtung geschlossen werden, wenn mittels der ersten elektronischen Steuervorrichtung die erste Druckquelle angesteuert wird, um einen Bremsdruck in der zweiten Baueinheit über das einzige druckfeste hydraulische Verbindungselement zwischen erster und zweiter Baueinheit aufzubauen.

Bevorzugt umfasst die zweite Baueinheit eine zweite elektronische Steuervorrichtung, welche die zweite Druckquelle und die Einlass- und Auslassventile ansteuert.

Das Kreistrennventil wird bevorzugt von der zweiten elektronischen Steuervorrichtung angesteuert. So können in Falle einer Leckage im zweiten Bremskreis der zweiten Baueinheit die beiden Bremskreise mittels der zweiten elektronischen Steuervorrichtung getrennt werden und die zweite elektronische Steuervorrichtung kann mittels der zweiten Druckquelle in zumindest dem ersten Bremskreis bzw. den dem ersten Bremskreis zugeordneten Radbremsen einen Druck aufbauen.

Das erste Trennventil wird bevorzugt von der zweiten elektronischen Steuervorrichtung angesteuert. So kann mittels der zweiten elektronischen Steuervorrichtung, z.B. im Fall einer Leckage in der ersten Baueinheit oder im Falle eines Ausfalls der ersten elektronischen Steuervorrichtung, das erste Trennventil geschlossen und ein Abfließen von Druckmittel aus der Bremsversorgungsleitung in die erste Baueinheit verhindert werden.

Bevorzugt umfasst die Bremsanlage eine erste elektrische Partition und eine zweite elektrische Partition, welche elektrisch unabhängig voneinander sind, wobei die erste Druckquelle und die erste elektronische Steuervorrichtung der ersten elektrischen Partition zugeordnet sind, und wobei die zweite Druckquelle, die zweite elektronische Steuervorrichtung und die Einlass- und Auslassventile der zweiten elektrischen Partition zugeordnet sind.

Bevorzugt ist auch das Kreistrennventil der zweiten elektrischen Partition zugeordnet.

Bevorzugt ist auch das erste Trennventil der zweiten elektrischen Partition zugeordnet.

Bevorzugt ist das zweite Trennventil der ersten elektrischen Partition zugeordnet.

Bevorzugt wird die erste Druckquelle ausschließlich von der ersten elektronischen Steuervorrichtung angesteuert und die zweite Druckquelle und die Einlass- und Auslassventile, sowie insbesondere das Kreistrennventil, werden ausschließlich von der zweiten elektronischen Steuervorrichtung angesteuert.

Bevorzugt wird das zweite Trennventil ausschließlich von der ersten elektronischen Steuervorrichtung angesteuert.

Bevorzugt wird das erste Trennventil ausschließlich von der zweiten elektronischen Steuervorrichtung angesteuert.

Besonders bevorzugt wird das dritte Trennventil, insbesondere ausschließlich, von der zweiten elektronischen Steuervorrichtung angesteuert.

Gemäß einer bevorzugten Weiterbildung der Erfindung wird die erste Druckquelle durch eine Zylinder-Kolben-Anordnung mit einem hydraulischen Druckraum gebildet, deren Kolben durch einen elektromechanischen Aktuator für einen Bremsdruckaufbau vor- und für einen Bremsdruckabbau zurückgefahren wird.

Besonders bevorzugt wird die erste Druckquelle durch eine Zylinder-Kolben-Anordnung mit einem hydraulischen Druckraum, einem Sauganschluss und einem Druckanschluss gebildet, deren Kolben durch einen elektromechanischen Aktuator vor- und zurückgefahren wird. Besonders bevorzugt ist der Sauganschluss über ein in Richtung des Druckraums öffnendes Rückschlagventil hydraulisch mit dem Druckmittelvorratsbehälter verbunden. Besonders bevorzugt ist der Druckanschluss über ein zweites Trennventil hydraulisch mit dem Druckmittelvorratsbehälter verbunden. Ganz besonders bevorzugt ist der Druckanschluss über ein erstes Trennventil hydraulisch mit der Bremsversorgungsleitung, insbesondere dem zweite Leitungsabschnitt der Bremsversorgungsleitung, verbunden.

Alternativ wird die erste Druckquelle besonders bevorzugt durch eine Zylinder-Kolben-Anordnung mit einem hydraulischen Druckraum, einem Sauganschluss, einem Druckanschluss und einem Schnüffelloch gebildet, deren Kolben durch einen elektromechanischen Aktuator vor- und zurückgefahren wird. Der Sauganschluss ist besonders bevorzugt über ein in Richtung des Druckraums öffnendes Rückschlagventil hydraulisch mit dem Druckmittelvorratsbehälter verbunden. Besonders bevorzugt ist das Schnüffelloch hydraulisch mit dem Druckmittelvorratsbehälter verbunden. Im Falle einer Zylinder-Kolben-Anordnung mit Schnüffelloch ist keine Verbindung zwischen Druckanschluss und Druckmittelvorratsbehälter mit einem zweiten Trennventil erforderlich bzw. vorgesehen. Ganz besonders bevorzugt ist der Druckanschluss über ein erstes Trennventil hydraulisch mit der Bremsversorgungsleitung, insbesondere dem zweite Leitungsabschnitt der Bremsversorgungsleitung, verbunden.

Alternativ wird die erste Druckquelle besonders bevorzugt durch eine Zylinder-Kolben-Anordnung mit einem hydraulischen Druckraum und einem Druckanschluss gebildet, deren Kolben durch einen elektromechanischen Aktuator vor- und zurückgefahren wird. Besonders bevorzugt ist der Druckanschluss über ein in Richtung des Druckraums öffnendes Rückschlagventil hydraulisch mit dem Druckmittelvorratsbehälter verbunden. Besonders bevorzugt ist der Druckanschluss über ein zweites Trennventil hydraulisch mit dem Druckmittelvorratsbehälter verbunden. Ganz besonders bevorzugt ist der Druckanschluss über ein erstes Trennventil hydraulisch mit der Bremsversorgungsleitung, insbesondere dem zweite Leitungsabschnitt der Bremsversorgungsleitung, verbunden.

Bevorzugt umfasst die erste Druckquelle einen Druckanschluss, welcher über ein elektrisch betätigbares, vorteilhafterweise stromlos offenes, zweites Trennventil hydraulisch mit dem Druckmittelvorratsbehälter verbunden ist. Besonders bevorzugt ist der Druckanschluss der ersten Druckquelle über das elektrisch betätigbare zweite Trennventil hydraulisch mit einem Sauganschluss der ersten Druckquelle verbunden.

Bevorzugt ist das zweite Trennventil in der ersten Baueinheit angeordnet.

Bevorzugt wird das zweite Trennventil von einer der ersten Baueinheit zugeordneten elektronischen Steuervorrichtung (erste elektronische Steuervorrichtung) angesteuert.

Gemäß einer bevorzugten Weiterbildung der Erfindung ist die zweite Druckquelle zwei- oder mehr-kreisig ausgeführt. Besonders bevorzugt ist die zweite Druckquelle als eine Zwei-Kolben-Pumpe oder Mehr-Kolben-Pumpe ausgeführt.

Gemäß einer ersten bevorzugten Weiterbildung der Erfindung sind die Druckseiten der zwei- oder mehr-kreisigen Druckquelle zusammengeschaltet zu einem gemeinsamen Druckanschluss und die Saugseiten der zwei- oder mehr-kreisigen Druckquelle zusammengeschaltet zu einem gemeinsamen Sauganschluss. Der Sauganschluss (und damit die Saugseiten) ist besonders bevorzugt mit dem Druckmittelvorratsbehälter, insbesondere mit der Rücklaufleitung der Auslassventile, verbunden. Der Druckanschluss (und damit die Druckseiten) ist besonders bevorzugt mit der Bremsversorgungsleitung, ganz besonders bevorzugt mit dem ersten Leitungsabschnitt der Bremsversorgungsleitung, verbunden.

Gemäß einer zweiten, alternativen bevorzugten Weiterbildung der Erfindung sind die Saugseiten der zwei- oder mehr-kreisigen Druckquelle zusammengeschaltet zu einem gemeinsamen Sauganschluss, während die Druckseiten der zwei- oder mehr-kreisigen Druckquelle nicht zusammengeschaltet sind, so dass ein erster und ein zweiter Druckanschluss vorgesehen sind. Der Sauganschluss (und damit die Saugseiten) ist besonders bevorzugt mit dem Druckmittelvorratsbehälter, insbesondere mit der Rücklaufleitung der Auslassventile, verbunden. Eine der Druckseiten (einer der Druckanschlüsse) ist besonders bevorzugt mit dem ersten Leitungsabschnitt der Bremsversorgungsleitung verbunden, die andere Druckseite (der andere Druckanschluss) ist besonders bevorzugt mit dem zweiten Leitungsabschnitt der Bremsversorgungsleitung verbunden.

Gemäß einer Weiterbildung der Erfindung umfasst die Bremsanlage eine Betätigungseinheit für einen Fahrzeugführer, wobei die Betätigungseinheit mit zumindest einer der beiden elektronischen Steuervorrichtungen zur Übermittlung eines Fahrerwunschsignals verbunden ist und wobei keine mechanisch-hydraulische Verbindung von der Betätigungseinheit zu den Radbremsen besteht.

Bevorzugt umfasst die Betätigungseinheit einen ersten Sensor zu Erfassung eines Bremswunsches des Fahrzeugführers und einen zweiten Sensor zu Erfassung eines Bremswunsches des Fahrzeugführers, welcher unabhängig von dem ersten Sensor ist. Bevorzugt ist der erste Sensor der einen der zwei elektrischen Partition zugeordnet und der zweite Sensor der anderen der zwei elektrischen Partition zugeordnet.

Bevorzugt ist der erste Sensor mit einer der beiden elektronischen Steuervorrichtungen signalseitig verbunden und der zweite Sensor mit der anderen der beiden elektronischen Steuervorrichtungen signalseitig verbunden.

Bevorzugt wird die erste elektronischen Steuervorrichtung bzw. die erste elektrische Partition von einer ersten elektrischen Energiequelle versorgt und die zweite elektronischen Steuervorrichtung bzw. die zweite elektrische Partition wird von einer zweiten elektrischen Energiequelle versorgt, welche von der ersten elektrischen Energiequelle unabhängig ist. Die erste Energiequelle ist somit Teil der ersten elektrischen Partition, die zweite Energiequelle ist Teil der zweiten elektrischen Partition.

Die erfindungsgemäße Bremsanlage bietet den Vorteil, dass die Anzahl der elektrisch betätigbaren Ventile gering ist. Weiterhin bietet sie den Vorteil, dass die Anzahl der hydraulischen Verbindungen, insbesondere die hydraulischen Verbindungen zwischen den Komponenten bzw. Baueinheiten der Bremsanlage, gering sind. So kann die Bremsanlage kostengünstig hergestellt und zusammengebaut werden.

Eine Aufteilung in zwei Baueinheiten bietet gegenüber einer Realisierung in nur einer Baueinheit den Vorteil, dass beide Baueinheiten jeweils kleiner und leichter und deshalb einfacher zu handhaben sind. Sie können auch einfacher auf vorhandenen Produktionsanlagen hergestellt werden. Andererseits führt bei einer Aufteilung in zwei Baueinheiten jede hydraulische Verbindung zwischen diesen Baueinheiten zu erheblichem Aufwand und erheblichen Kosten. Es ist daher besonders vorteilhaft die Anzahl der hydraulischen Verbindungen möglichst klein zu halten. Es hat sich gezeigt, dass es vorteilhaft ist, die verschiedenen Funktionen von hydraulischen Verbindungen möglichst klar zu trennen. So können Verbindungen, über die Druckmittel angesaugt wird, mit einem möglichst großen Durchmesser ausgeführt werden, damit sie einen möglichst kleinen hydraulischen Widerstand besitzen. Dafür ist es vorteilhaft, wenn erreicht wird, dass solche Verbindungen nicht druckfest sein müssen. Umgekehrt sollten drucktragende Verbindungen keine Ansaugfunktion haben.

Die erfindungsgemäße Bremsanlage bietet auch den Vorteil, dass durch die Wahl und Anordnung der elektrisch betätigbaren Ventile in den Baueinheiten, die zugehörige elektronische Partitionierung und insbesondere die Zuordnung zwischen elektrisch betätigbaren Ventilen und elektronischen Steuervorrichtungen eine klare Trennung der Eigenschaften der hydraulischen Verbindungen ermöglicht wird.

Die Erfindung bietet weiterhin den Vorteil, dass die Bremsanlage auch bei Ausfall einer der beiden redundanten elektrischen Druckquellen, z.B. aufgrund eines Ausfalls der ihr zugeordneten elektrischen Energiequelle oder der ihr zugeordneten elektronischen Steuervorrichtung oder eines mechanischen Fehlers oder einer Leckage in der Druckquelle selbst, die wichtigsten Rest-Bremsfunktionen aufrechterhalten kann.

Die erfindungsgemäße Bremsanlage ist daher besonders zur Realisierung von hochautomatisierten Fahrfunktionen geeignet.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsanlage,
- Fig. 2: ein zweites Ausführungsbeispiel einer erfindungsgemäßen Bremsanlage,
- Fig. 3: ein drittes Ausführungsbeispiel einer erfindungsgemäßen Bremsanlage,
- Fig. 4: ein viertes Ausführungsbeispiel einer erfindungsgemäßen Bremsanlage,
- Fig. 5: ein fünftes Ausführungsbeispiel einer erfindungsgemäßen Bremsanlage,
- Fig. 6: ein weiteres Ausführungsbeispiel einer erfindungsgemäßen Bremsanlage,
- Fig. 7: ein weiteres Ausführungsbeispiel einer erfindungsgemäßen Bremsanlage und
- Fig. 8: ein weiteres Ausführungsbeispiel einer erfindungsgemäßen Bremsanlage.

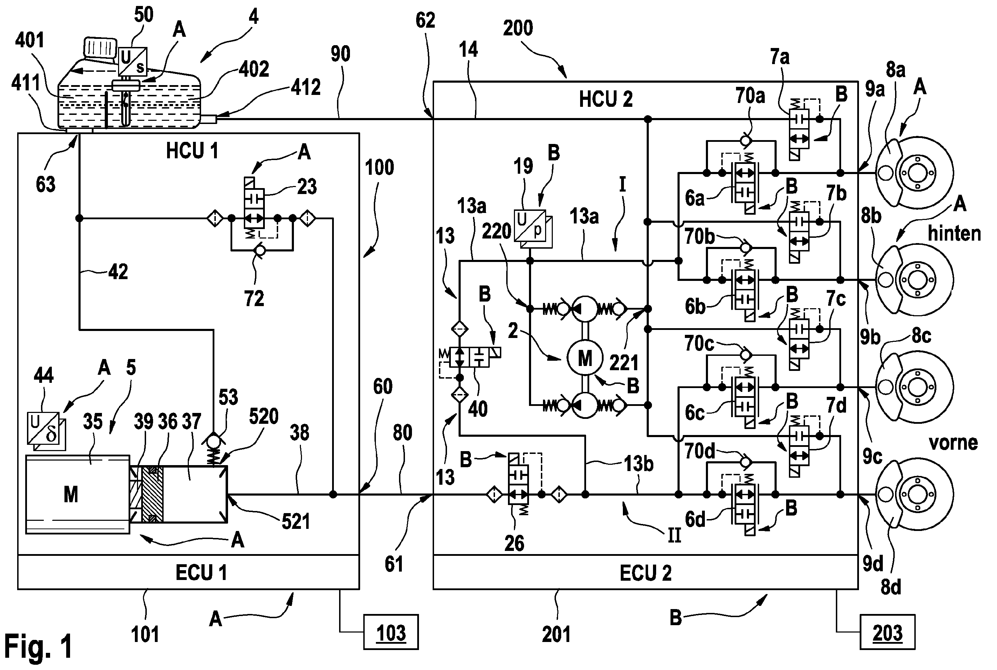

In Fig. 1 ist ein erstes Ausführungsbeispiel einer erfindungsgemäßen Bremsanlage für ein Kraftfahrzeug stark schematisch dargestellt. Beispielsgemäß ist die Bremsanlage zur Betätigung von vier hydraulisch betätigbaren Radbremsen 8a-8d ausgebildet, eine Erweiterung auf mehr Radbremsen sind einfach möglich. Beispielsgemäß sind die Radbremsen 8a, 8b der Hinterachse (rear) und die Radbremsen 8c, 8d der Vorderachse (front) des Fahrzeugs zugeordnet.

Die Bremsanlage umfasst eine erste Baueinheit 100, welche beispielsgemäß als ein erstes elektrohydraulisches Bremsensteuergerät (HECU1) mit einem Ventilblock HCU1 und einer ersten elektronischen Steuervorrichtung 101 (ECU1) ausgeführt ist, eine zweite Baueinheit 200, welche beispielsgemäß als ein zweites elektrohydraulisches Bremsensteuergerät (HECU2) mit einem Ventilblock HCU2 und einer zweiten elektronischen Steuervorrichtung 201 (ECU2) ausgeführt ist, und einen Druckmittelvorratsbehälter 4.

Der unter Atmosphärendruck stehende Druckmittelvorratsbehälter 4 ist vorteilhafterweise an der ersten Baueinheit 100 angeordnet. Druckmittelvorratsbehälter 4 umfasst beispielsgemäß zwei Kammern, wobei der ersten Kammer 401 ein erster Behälteranschluss 411 zugeordnet ist und der zweiten Kammer 402 ein zweiter Behälteranschluss 412 zugeordnet ist.

In der ersten Baueinheit 100 ist eine erste elektrisch betätigbare Druckquelle 5 angeordnet.

In der zweiten Baueinheit 200 sind eine zweite elektrisch betätigbare Druckquelle 2 sowie radindividuelle Bremsdruckmodulationsventile angeordnet, welche als ein elektrisch betätigbares Einlassventil 6a-6d je Radbremse 8a-8d und ein elektrisch betätigbares Auslassventil 7a-7d je Radbremse 8a-8d ausgeführt sind.

Die erste Druckquelle 5 und die zweite Druckquelle 2 sind druckseitig mit einer Bremsversorgungsleitung 13 verbunden, an welche die vier Einlassventile 6a-6d angeschlossen sind. So können alle vier Radbremsen 8a-8d mittels der ersten Druckquelle 5 oder mittels der zweiten Druckquelle 2 betätigt werden.

In der Bremsversorgungsleitung 13 ist ein elektrisch betätigbares Kreistrennventil 40 angeordnet, so dass bei geschlossenem Kreistrennventil 40 die Bremsversorgungsleitung 13 in einen ersten Leitungsabschnitt 13a, an welchen die Einlassventile 6a, 6b bzw. die Radbremsen 8a, 8b angeschlossen sind, und einen zweiten Leitungsabschnitt 13b, an welchen die Einlassventile 6c, 6d bzw. die Radbremsen 8c, 8d angeschlossen sind, getrennt wird. Die zweite Druckquelle 2 ist mit dem ersten Leitungsabschnitt 13a hydraulisch verbunden und die erste Druckquelle 5 ist mit dem zweiten Leitungsabschnitt 13b hydraulisch verbunden. Bei geschlossenen Kreistrennventil 40 ist die Bremsanlage somit in zwei hydraulische Bremskreise und II getrennt oder aufgeteilt. Dabei ist im ersten Bremskreis I die Druckquelle 2 (über den ersten Leitungsabschnitt 13a) mit nur noch den Radbremsen 8a und 8b verbunden, und im zweiten Bremskreis II ist die erste Druckquelle 5 (über den zweiten Leitungsabschnitt 13b) mit nur noch den Radbremsen 8c und 8d verbunden. Das Kreistrennventil 40 ist vorteilhafterweise stromlos offen ausgeführt.

Die Bremsanlage umfasst, wie bereits erwähnt, je hydraulisch betätigbarer Radbremse 8a-8d ein Einlassventil 6a-6d und ein Auslassventil 7a-7d, die paarweise über Mittenanschlüsse hydraulisch zusammengeschaltet und jeweils mit einem hydraulischen Radanschluss 9a-9d der zweiten Baueinheit 200 verbunden sind, an welche die entsprechende Radbremse 8a-8d angeschlossen ist. Den Einlassventilen 6a-6d ist jeweils ein zu der Bremsversorgungsleitung 13 hin öffnendes Rückschlagventil 70a-70d parallelgeschaltet. Die Ausgangsanschlüsse der Auslassventile 7a-7d sind über eine gemeinsame Rücklaufleitung 14 mit einem hydraulischen Anschluss 62 der zweiten Baueinheit 200 verbunden, welcher mit dem Druckmittelvorratsbehälter 4, beispielsgemäß mit dessen zweitem Behälteranschluss 412 bzw. mit dessen Kammer 402, verbunden ist. Die Eingangsanschlüsse aller Einlassventile 6a-6d können mittels der Bremsversorgungsleitung 13 (also bei offenem Kreistrennventil 40) mit einem Druck versorgt werden, der von der ersten Druckquelle 5 oder, z.B. bei Ausfall der ersten Druckquelle 5, von der zweiten Druckquelle 2 bereitgestellt wird.

Die zweite elektrisch steuerbare Druckquelle 2 der zweiten Baueinheit 200 umfasst einen Druckanschluss 220, welcher mit dem ersten Leitungsabschnitt 13a hydraulisch verbunden, und einen Sauganschluss 221, welcher mit dem Druckmittelvorratsbehälter 4, beispielsgemäß über Rücklaufleitung 14 und Anschluss 62, hydraulisch verbunden ist. Anschluss 62, und damit der Sauganschluss (die Saugseite(n)) 221 der Druckquelle 2, ist über eine Leitung oder einen Schlauch 90 mit dem Druckmittelvorratsbehälter 4 direkt verbunden. Diese Verbindung 90 trägt keinen Druck und kann deshalb einen großen Durchmesser haben. Beispielsgemäß ist Anschluss 62 mittels Verbindungsleitung/ Verbindungsschlauch 90 mit dem zweiten Behälteranschluss 412 (und damit der zweiten Kammer 402) des Druckmittelvorratsbehälters 4 hydraulisch verbunden.

Die erste elektrisch steuerbare Druckquelle 5 der ersten Baueinheit 100 (bzw. des Ventilblocks HCU1) ist als eine hydraulische Zylinder-Kolben-Anordnung (bzw. ein einkreisiger elektrohydraulischer Aktuator (Linearaktuator)) ausgebildet, deren Kolben 36 von einem schematisch angedeuteten Elektromotor 35 unter Zwischenschaltung eines ebenfalls schematisch dargestellten Rotations-Translationsgetriebes 39 betätigbar ist, insbesondere vor- und zurückgefahren werden kann, um einen Druck in einem Druckraum 37 auf- und abzubauen. Der Kolben 36 begrenzt den Druckraum 37 der Druckquelle 5. Zur Ansteuerung des Elektromotors ist ein die Rotorlage des Elektromotors 35 erfassender, lediglich schematisch angedeuteter Rotorlagensensor 44 vorgesehen.

An den Druckraum 37 der ersten elektrisch steuerbaren Druckquelle 5 ist ein Systemdruckleitungsabschnitt 38 angeschlossen. Mittels Leitungsabschnitt 38 ist Druckquelle 5 bzw. deren Druckraum 37 hydraulisch mit einem hydraulischen Anschluss 60 der ersten Baueinheit 100 verbunden, welcher über ein hydraulisches Verbindungselement 80 mit einem hydraulischen (Druck)Anschluss 61 der zweiten Baueinheit 200 hydraulisch verbunden ist. Verbindung 80 stellt die einzige hydraulische Druckverbindung, insbesondere die einzige hydraulische Verbindung, zwischen der ersten Baueinheit 100 und der zweiten Baueinheit 200 dar. Es handelt sich dabei um eine hydraulische Verbindung zur Übertragung eines Bremsdrucks zur Betätigung der Radbremsen 8a-8d (daher Druckverbindung). Verbindungselement 80 muss daher druckfest ausgeführt sein, z.B. als ein druckfester Bremsschlauch.

Druckraum 37 ist beispielsgemäß, unabhängig vom Betätigungszustand des Kolbens 36, über eine in der ersten Baueinheit 100 ausgebildete (Nachsaug)Leitung 42 mit einem hydraulischen Anschluss 63 der ersten Baueinheit 100 hydraulisch verbunden. Anschluss 63 ist hydraulisch mit dem Druckmittelvorratsbehälter 4, beispielsgemäß mit dessen ersten Behälteranschluss 411 und damit dessen erster Kammer 401, verbunden. In der (Nachsaug)Leitung 42 ist ein in Richtung des Druckmittelvorratsbehälters 4 schließendes Rückschlagventil 53 angeordnet. Die beispielsgemäße Druckquelle / Zylinder-Kolben-Anordnung 5 weist beispielsgemäß keine Schnüffellöcher auf.

Weiterhin ist Druckraum 37 beispielsgemäß über den Leitungsabschnitt 38 und ein elektrisch betätigbares, vorteilhafterweise stromlos offen ausgeführtes, zweites Trennventil 23 mit dem hydraulischen Anschluss 63 (sowie der (Nachsaug)Leitung 42) hydraulisch verbunden. Dem zweite Trennventil 23 ist beispielsgemäß ein in Richtung des Druckraums 37 öffnendes Rückschlagventil 72 parallelgeschaltet.

Neben dem (Druckmittelvorratsbehälter-)Anschluss 63 und dem (Druck)Anschluss 60 umfasst die erste Baueinheit 100 beispielsgemäß keinen weiteren hydraulischen Anschluss.

Die zweite elektrisch steuerbare Druckquelle 2 der zweiten Baueinheit 200 ist beispielsgemäß als eine Zwei-Kolben-Pumpe ausgeführt, deren zwei Druckseiten zusammengeschaltet sind (zum Druckanschluss 220) und deren zwei Saugseiten zusammengeschaltet sind (zum Sauganschluss 221). Sauganschluss 221 (und damit die beiden Saugseiten) der Druckquelle 2 ist hydraulisch mit der Rücklaufleitung 14 und somit dem Anschluss 62 bzw. dem Druckmittelvorratsbehälter 4 verbunden. Druckanschluss 220 (und damit die beiden Druckseiten) der Druckquelle 2 sind mit dem ersten Leitungsabschnitt 13a der Bremsversorgungsleitung 13 verbunden.

Neben der Druckquelle 2 und den Bremsdruckmodulationsventilen 6a-6d, 7a-7d ist in der zweiten Baueinheit 200 bevorzugt ein elektrisch betätigbares, vorteilhafterweise stromlos offenes, Trennventil 26 angeordnet. Trennventil 26 ist hydraulisch zwischen dem Anschluss 61 und dem zweiten Leitungsabschnitt 13b der Bremsversorgungsleitung 13 angeordnet. Somit ist die erste Druckquelle 5 über das Trennventil 26 mit dem zweiten Leitungsabschnitt 13b bzw. der Bremsversorgungsleitung 13 trennbar verbunden.

Die Bremsanlage umfasst beispielsgemäß im Bremskreis I (Leitungsabschnitt 13a) einen Drucksensor 19, welcher somit der zweiten Druckquelle 2 zugeordnet ist. Dies ist vorteilhaft für den Berstschutz bei aktiver Kreistrennung, also wenn das Kreistrennventil 40 geschlossen ist. Drucksensor 19 kann aber auch im Bremskreis II angeordnet sein oder es kann ein zweiter Drucksensor vorgesehen sein, so dass jeder der beiden Bremskreis I und II mittels eines Drucksensors direkt überwacht werden kann.

Beispielsgemäß umfasst die Bremsanlage zur Leckageüberwachung eine Pegelmesseinrichtung 50 zur Bestimmung eines Druckmittel-Pegels in dem Druckmittelvorratsbehälter 4.

Beispielsgemäß sind die Komponenten 5, 53, 23, 72 sowie die Leitungsabschnitte 38, 42 in dem ersten Ventilblock HCU1 angeordnet und die Komponenten 2, 6a-6d, 7a-7d, 26, 19 sowie die Leitungsabschnitte 13a, 13b (und die Leitungsabschnitte zwischen den Einlass- und Auslassventilen einerseits und den Radanschlüssen andererseits) in dem zweiten Ventilblock HCU2 angeordnet.

Jedem Ventilblock HCU1, HCU2 ist eine elektronische Steuervorrichtung 101, 201 (ECU1, ECU2) zugeordnet. Jede elektronische Steuervorrichtung 101, 201 umfasst elektrische und/oder elektronische Elemente (z.B. Mikrocontroller, Leistungsteile, Ventiltreiber, sonstigen elektronische Bauteile, etc.) zur Ansteuerung der elektrisch betätigbaren Komponenten des zugehörigen Ventilblocks (Baueinheit) und ggf. zur Auswertung der Signale der diesem Ventilblock (Baueinheit) zugeordneten Sensoren. Ventilblock und elektronische Steuervorrichtung sind vorteilhafterweise in bekannterweise als eine elektrohydraulische Einheit (HECU) ausgeführt.

Zur elektrischen Anbindung, Verbindung und Versorgung der einzelnen elektrischen bzw. elektrisch betätigbaren, ansteuerbaren, auswertbaren o.ä. Komponenten der Bremsanlage sind eine erste elektrische Partition A und eine zweite elektrische Partition B vorgesehen, welche elektrisch unabhängig voneinander sind.

In den Figuren sind diejenigen elektrischen Komponenten, welche der ersten elektrischen Partition A zugeordnet sind bzw. dieser angehören, durch einen Pfeil mit A gekennzeichnet, während diejenigen elektrischen Komponenten, welche der zweiten elektrischen Partition B zugeordnet sind bzw. dieser angehören, durch einen Pfeil mit B gekennzeichnet sind.

Die elektronische Steuervorrichtung 101 ist der ersten elektrischen Partition A zugeordnet bzw. gehört dieser an, während die zweite elektronische Steuervorrichtung 201 der zweiten elektrischen Partition B zugeordnet ist bzw. angehört. Entsprechend sind die elektronische Steuervorrichtung 101 und die zweite elektronische Steuervorrichtung 201 elektrisch unabhängig.

Zur Versorgung der Bremsanlage mit elektrischer Energie sind eine erste elektrische Energiequelle 103, z.B. ein Bordnetz, und eine von der ersten Energiequelle unabhängige, zweite elektrische Energiequelle 203, z.B. ein Bordnetz, vorgesehen. Die erste elektrische Energiequelle 103 versorgt die erste elektrische Partition A mit Energie und die zweite elektrische Energiequelle 203 versorgt die zweite elektrische Partition B.

Die erste elektronische Steuervorrichtung 101 steuert die erste Druckquelle 5 an. Entsprechend ist die erste Druckquelle 5 der ersten elektrischen Partition A zugeordnet bzw. zugehörig. Beispielsgemäß wird die erste Druckquelle 5 über die erste elektronische Steuervorrichtung 101 mit Energie (von der ersten elektrischen Energiequelle 103) versorgt.

Die zweite elektronische Steuervorrichtung 201 steuert die zweite Druckquelle 2 an. Entsprechend ist die zweite Druckquelle 2 der zweiten elektrischen Partition B zugeordnet bzw. zugehörig. Beispielsgemäß wird die zweite Druckquelle 2 über die zweite elektronische Steuervorrichtung 201 mit Energie (von der zweiten elektrischen Energiequelle 203) versorgt.

Beispielsgemäß lässt sich bzw. wird die erste Druckquelle 5 ausschließlich durch die erste elektronische Steuervorrichtung 101 und die zweite Druckquelle 2 ausschließlich durch die zweite elektronische Steuervorrichtung 201 ansteuern bzw. angesteuert. Grundsätzlich wäre es denkbar den Elektromotor einer Druckquelle z.B. mit zwei elektrisch unabhängigen Motorwicklungen auszustatten, so könnte die Druckquelle von den zwei unabhängigen elektrischen Einrichtungen angesteuert werden. Dies wäre jedoch mit weiteren Redundanzen, z.B. zweifachen Verbindungsleitungen etc., verbunden und daher kostenintensiver.

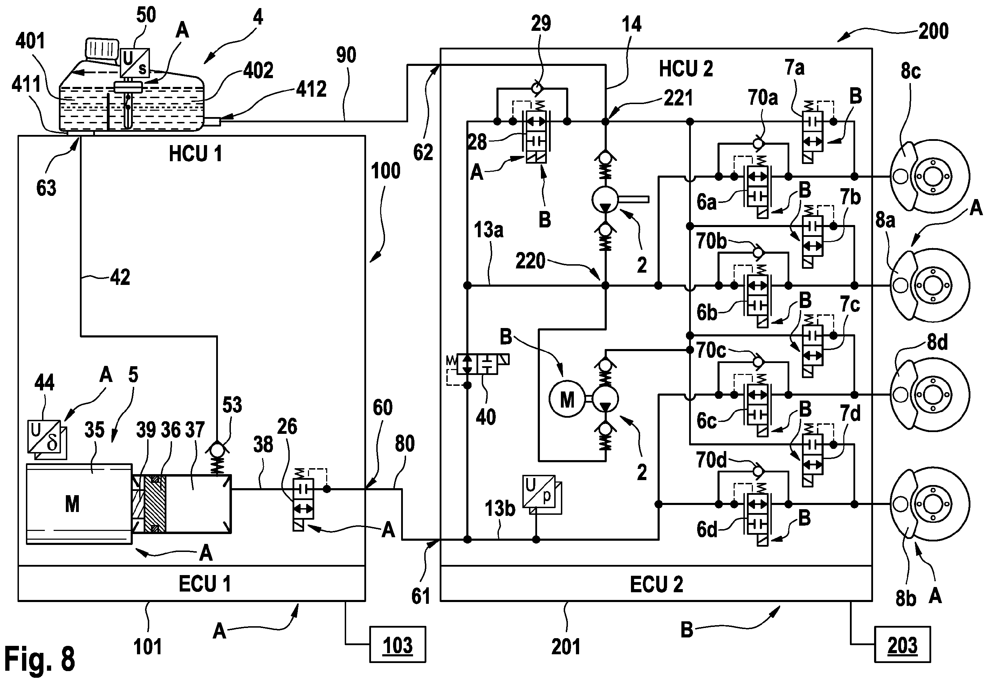

Die übrigen Komponenten der Bremsanlage sind in vorteilhafterweise entweder der ersten elektronischen Steuervorrichtung 101 (Partition A) oder der zweiten elektronischen Steuervorrichtung 201 (Partition B) zugeordnet. D.h. sie werden durch diese Steuervorrichtung angesteuert bzw. betätigt und/oder mit elektrischer Energie versorgt und/oder sind Signalseitig mit dieser Steuervorrichtung verbunden und/oder werden durch diese Steuervorrichtung ausgewertet. Um weitere Redundanzen zu vermeiden, ist vorteilhafterweise eine Komponente lediglich bzw. ausschließlich von einer der beiden elektronischen Steuervorrichtungen 101, 201, nicht aber von der anderen elektronischen Steuervorrichtung, ansteuerbar bzw. betätigbar oder mit elektrischer Energie versorgbar oder signalseitig verbunden oder auswertbar (Ausnahme siehe Ausführungsbeispiel der Fig. 8 mit einem doppelt ansteuerbaren Ventil 28).

Die Einlass- und Auslassventile 6a-6d, 7a-7d sind der zweiten elektrischen Partition B zugeordnet und werden von der zweiten elektronischen Steuervorrichtung 201 angesteuert. Ebenso ist das Kreistrennventil 40 der zweiten elektrischen Partition B zugeordnet und wird von der zweiten elektronischen Steuervorrichtung 201 angesteuert.

Auch das Trennventil 26 zur Trennung von erster Druckquelle 5 und Bremsversorgungsleitung 13 ist beispielsgemäß der zweiten elektrischen Partition B zugeordnet und wird von der zweiten elektronischen Steuervorrichtung 201 angesteuert.

Drucksensor 19 ist ebenso der zweiten elektrischen Partition B zugeordnet. Seine Signale werden der zweiten elektronischen Steuervorrichtung 201 zugeleitet und von dieser ausgewertet und verarbeitet.

Das Trennventil 23 ist der ersten elektrischen Partition A zugeordnet und wird von der ersten elektronischen Steuervorrichtung 101 angesteuert.

Weiterhin werden der ersten elektronischen Steuervorrichtung 101 die Signale der Pegelmesseinrichtung 50 zugeleitet und von dieser ausgewertet und verarbeitet.

Bevorzugt umfasst die Bremsanlage elektrisch betätigbare Parkbremsen an den Hinterrädern (rear). Diese werden vorteilhafterweise von der ersten elektronischen Steuervorrichtung 101 angesteuert und betätigt, gekennzeichnet durch A an den Radbremsen 8a, 8b in Fig. 1.

Die beispielsgemäße Bremsanlage weist eine primäre Druckquelle 5 und eine sekundäre Druckquelle 2 auf, die von jeweils einer ECU (Electronic Control Unit) elektrisch betrieben werden und einen Sauganschluss und einen Druckanschluss haben. In den Druckanschluss 220 der Sekundärdruckquelle 2 kann auch im stromlosen Zustand keine Bremsflüssigkeit einströmen. Bevorzugt ist die primäre Druckquelle 5 ein Linearaktuator mit Nachsaug-Rückschlagventil 53 und die sekundäre Druckquelle 2 eine Kolbenpumpe. Bevorzugt kann die sekundäre Druckquelle 2 einen höheren Druck als die primäre Druckquelle 5 erzeugen.

Die Sauganschlüsse 221 bzw. 520 der beiden Druckquellen 2 bzw. 5 sind mit einem Druckmittelvorratsbehälter 4 verbunden, bevorzugt jeweils mit einer von zwei getrennten Kammern (402, 401).

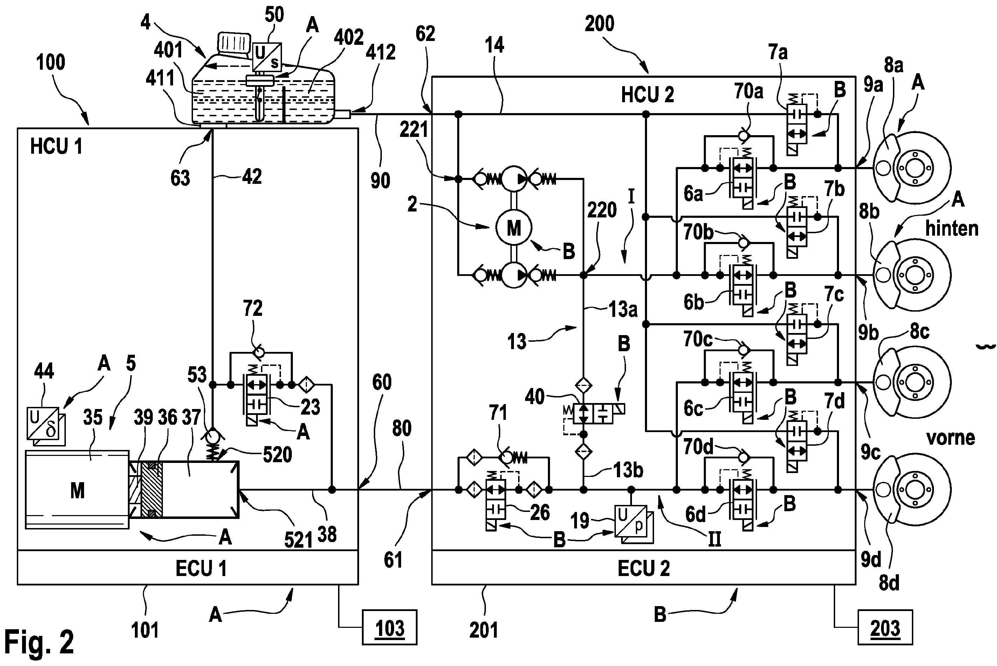

Der Druckanschluss 521 der primären Druckquelle 5 ist über ein elektromagnetisches Ventil 26, auch Druckzuschaltventil genannt, mit einem primären Kreisknoten (zweiter Leitungsabschnitt 13b) verbunden. Dem Ventil 26 kann ein Rückschlagventil 71 parallelgeschaltet sein (siehe z.B. Fig. 2), das einen Volumenstrom von der Primärdruckquelle 5 zum Primärkreisknoten (13b) zulässt.

Der Druckanschluss 220 der sekundären Druckquelle 2 ist direkt (ohne Zwischenschaltung eines Ventils) mit einem sekundären Kreisknoten (ersten Leitungsabschnitt 13a) verbunden.

Die beiden Kreisknoten (Leitungsabschnitte 13a, 13b) sind über ein elektromagnetisches Ventil 40, auch Kreistrennventil genannt, miteinander verbunden.

Die beiden Kreisknoten sind über elektromagnetische Einlassventile 6a-6d mit Radbremsen 8a-8d verbunden, beispielsgemäß der Primärkreisknoten (13b) mit den Radbremsen 8c, 8d der Vorderachse und der Sekundärkreisknoten (13a) mit den Radbremsen 8a, 8b der Hinterachse.

Die Radbremsen 8a-8d sind über elektromagnetische Auslassventile 7a-7d mit dem Druckmittelvorratsbehälter 4 verbunden.

Der Ausgangsanschluss 521 der primären Druckquelle 5 ist über ein elektromagnetisches Ventil 23, auch Druckabbauventil genannt, mit dem Druckmittelvorratsbehälter 4 verbunden.

Bevorzugt sind Ventil 26, Ventil 40 und Ventil 23 stromlos offen ausgeführt.

Im Normalbremsbetrieb wird der Druck in den Radbremsen 8a-8d von der Primärdruckquelle 5 bei geschlossenem Trennventil 23 aufgebaut. Abgebaut wird der Druck in die Primärdruckquelle 5 (Zurückfahren des Kolbens 36) oder über das Trennventil 23 in den Druckmittelvorratsbehälter 4.

Von den Einlass- und Auslassventilen 6a-6d, 7a-7d wird der Radbremsdruck bei Bedarf radindividuell moduliert (z.B. bei einer Antiblockierregelung oder sonstigen Bremsregelfunktion). Gegebenenfalls wird das Trennventil 26 geschlossen, damit die Primärdruckquelle 5 zusätzliches Volumen aus dem Druckmittelvorratsbehälter 4 nachsaugen kann.

Wenn ein besonders hoher Volumenstrom benötigt bzw. angefordert wird, arbeiten beide Druckquellen 5 und 2 bevorzugt gleichzeitig parallel. In diesem Fall geschieht der Druckabbau zumindest teilweise über das Trennventil 23, das bevorzugt als Analogventil ausgeführt ist, also seinen Durchfluss steuern kann. Wenn ein besonders hoher Druck angefordert wird, wird bevorzugt das Trennventil 26 geschlossen und die Sekundärdruckquelle 2 erhöht den Druck über den Druck der Primärdruckquelle 5 hinaus.

Außerhalb von Bremsungen ist der atmosphärische Druckausgleich über Trennventil 23 und Trennventil 26 permanent gewährleistet.

Bei einer Leckage in der Bremsanlage wird bevorzugt das Kreistrennventil 40 geschlossen und das System dadurch in zwei unabhängige Bremskreise I und II aufgeteilt.

Bevorzugt wird das Trennventil 23 von der primären ECU 101 angesteuert. Bevorzugt wird das Trennventil 26 von der sekundären ECU 201 angesteuert. Auf diese Ventilzuordnung bezieht sich die folgende Beschreibung des Betriebs im Fehlerfall.

Wenn das Primärsystem (Baueinheit 100) elektrisch ausfällt, insbesondere die primäre ECU 101 oder ihre Spannungsversorgung 103 (Ausfall der Partition A), schließt die sekundäre ECU 201 das Trennventil 26, um über die Sekundärdruckquelle 2 Druck aufzubauen. Abgebaut wird Druck über das Trennventil 26 oder über die Auslassventile 7a-7d. Bevorzugt werden die Ein- und Auslassventile von der sekundären ECU 201 (Partition B) angesteuert, so dass der Druck radindividuell moduliert werden kann.

Wenn das Sekundärsystem (Baueinheit 200) elektrisch ausfällt, insbesondere die sekundäre ECU 201 oder ihre Spannungsversorgung 203 (Ausfall der Partition B), wird der Druck wie im Normalbetrieb über die primäre Druckquelle 5 und gegebenenfalls das Trennventil 23 auf- und abgebaut. Auf eine radindividuelle Druckregelung muss verzichtet werden, aber eine gemeinsame Modulation der Raddrücke bleibt möglich, um zu verhindern, dass das Fahrzeug durch blockierende Räder destabilisiert wird.

Bevorzugt ist die Zuordnung der Ventile zu den beiden ECUs wie oben beschrieben, das Kreistrennventil 40 wird von der sekundären ECU 201 angesteuert, und das System ist in zwei Baueinheiten 100 und 200 mit zwei hydraulischen Verbindungsleitungen, nämlich das druckfeste Verbindungselement 80 und die drucklose bzw. nicht-druckfeste Verbindungsleitung 90, aufgeteilt. Diese beiden Baueinheiten 100, 200 umfassen bevorzugt jeweils eine der beiden ECUs, die zugeordnete Druckquelle und die zugeordneten Ventile.

In Fig. 2 ist ein zweites Ausführungsbeispiel einer erfindungsgemäßen Bremsanlage schematisch dargestellt. Im Unterschied zum ersten Ausführungsbeispiel der Fig. 1 ist dem Trennventil 26 der zweiten Baueinheit 200 ein Rückschlagventil 71 parallelgeschaltet, das einen Volumenstrom von der Primärdruckquelle 5 zum Leitungsabschnitt 13b zulässt, um den hydraulischen Widerstand des Ventils 26 in Druckaufbaurichtung zu verringern. Weiterhin ist der Drucksensor 19 an dem Leitungsabschnitt 13b (Bremskreis II) angeordnet.

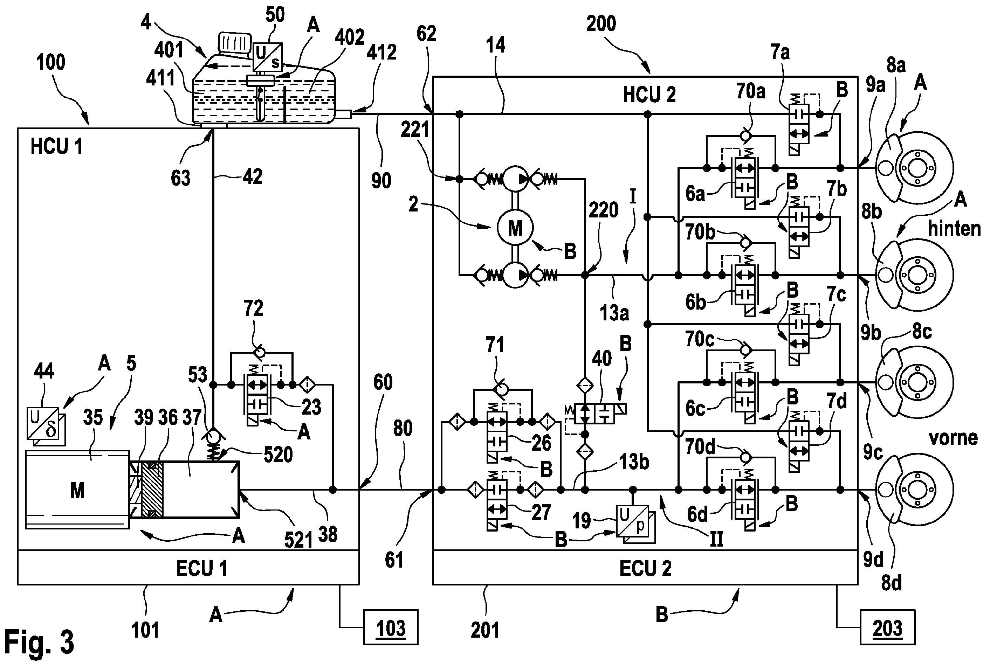

In Fig. 3 ist ein drittes Ausführungsbeispiel einer erfindungsgemäßen Bremsanlage schematisch dargestellt. Im Unterschied zum zweiten Ausführungsbeispiel der Fig. 2 ist in der zweiten Baueinheit 200 ein weiteres elektrisch betätigbares Ventil 27 vorgesehen, welches stromlos geschlossen ausgeführt ist. Dieses ist dem Trennventil 26 parallelgeschaltet. Ventil 27 wird von der zweiten elektronischen Steuervorrichtung 201 angesteuert.

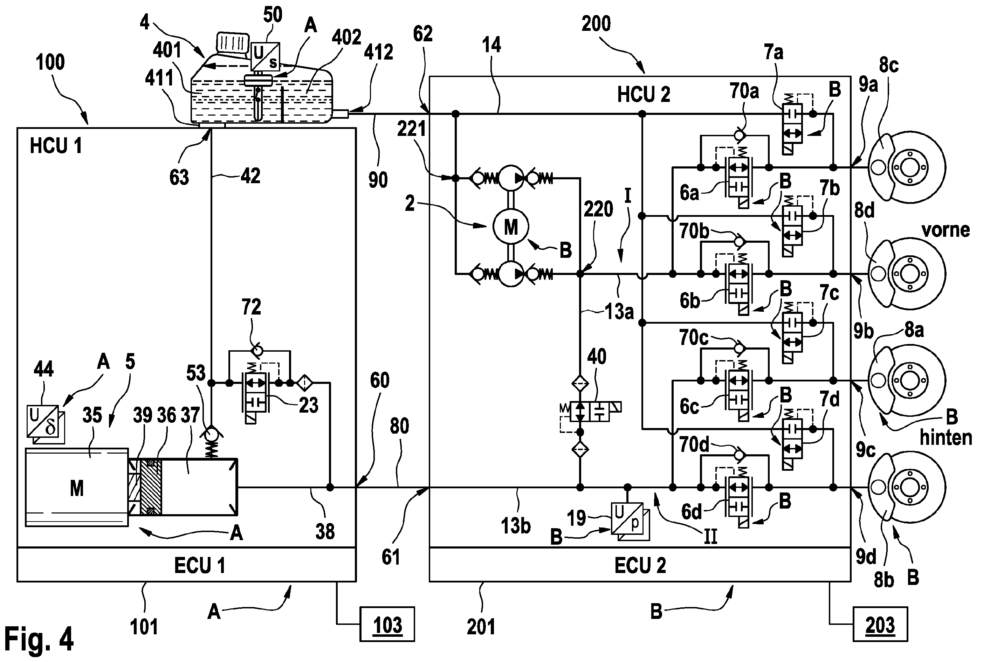

In Fig. 4 ist ein viertes Ausführungsbeispiel einer erfindungsgemäßen Bremsanlage schematisch dargestellt. Im Unterschied zu der Bremsanlage der Fig. 1 ist das Trennventil 26 entfallen. Die Druckquelle 5 ist direkt mit dem ersten Leitungsabschnitt 13a verbunden.

Die Einsparung des Trennventils 26 führt allerdings zu mehreren Nachteilen. Falls die erste Baueinheit 100 ausfällt (z.B. durch einen elektrischen Fehler in der ECU1 oder Partition A, oder durch eine Leckage in Baueinheit 100), kann die Druckquelle 2 Druck nur noch im ersten Leitungsabschnitt 13a aufbauen (bei geschlossenem Kreistrennventil 40). Die Druckquelle 5 kann nur noch nachsaugen, wenn im zweiten Leitungsabschnitt 13b Einlassventile 6c, 6d ohne Rückschlagventil 70c, 70d (nicht dargestellt) verwendet werden.

Vorteilhafterweise sind daher die Fahrzeugachsen in diesem Ausführungsbeispiel vertauscht, d.h. der zweite Leitungsabschnitt 13b ist mit den Radbremsen 8a, 8b der Hinterachse (rear) verbunden und der erste Leitungsabschnitt 13a, der mit Druckquelle 2 verbunden ist, ist mit den Radbremsen 8c, 8d der Vorderachse verbunden.

Die elektrisch betätigbaren Parkbremsen an den Hinterrädern (rear) werden vorteilhafterweise von der zweiten elektronischen Steuervorrichtung 201 angesteuert und betätigt (gekennzeichnet durch B an den Radbremsen 8a, 8b in Fig. 4).

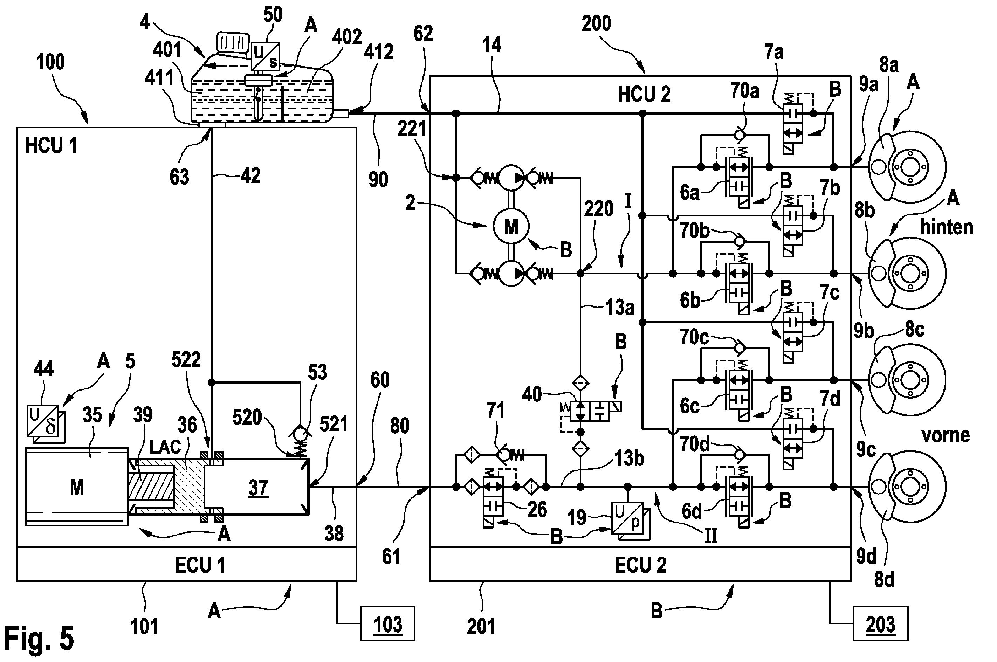

In Fig. 5 ist ein fünftes Ausführungsbeispiel einer erfindungsgemäßen Bremsanlage schematisch dargestellt. Im Unterschied zu der Bremsanlage der Fig. 2 ist das Trennventil 23 inkl. Rückschlagventil 72 entfallen. Es ist also die hydraulische Verbindung mit Ventil 23, 72 zwischen Leitungsabschnitt 38 und 42 entfallen. Dafür umfasst die Druckquelle 5 zusätzlich einen Mechanismus zur atmosphärischen Anbindung. Beispielsgemäß ist die Zylinder-Kolben-Anordnung 5 (Linearaktuator) mit einem Schnüffelloch 522 ausgeführt.

Eine entsprechende Ausführung (Entfall Ventile 23, 72 und Ausführung der Druckquelle 5 mit Schnüffelloch 522) ist auch in den Bremsanlagen der Ausführungsbeispiele der Fig. 1, 3, 4 möglich.

Die Einsparung des Trennventils 23 führt also zu einem zusätzlichen Aufwand in der Druckquelle 5. Die oben beschriebene Funktion des Trennventils 23, von der Druckquelle 2 bereitgestelltes Zusatzvolumen wieder abzubauen, muss von den Auslassventilen 7a-7d übernommen werden, was weniger komfortabel ist.

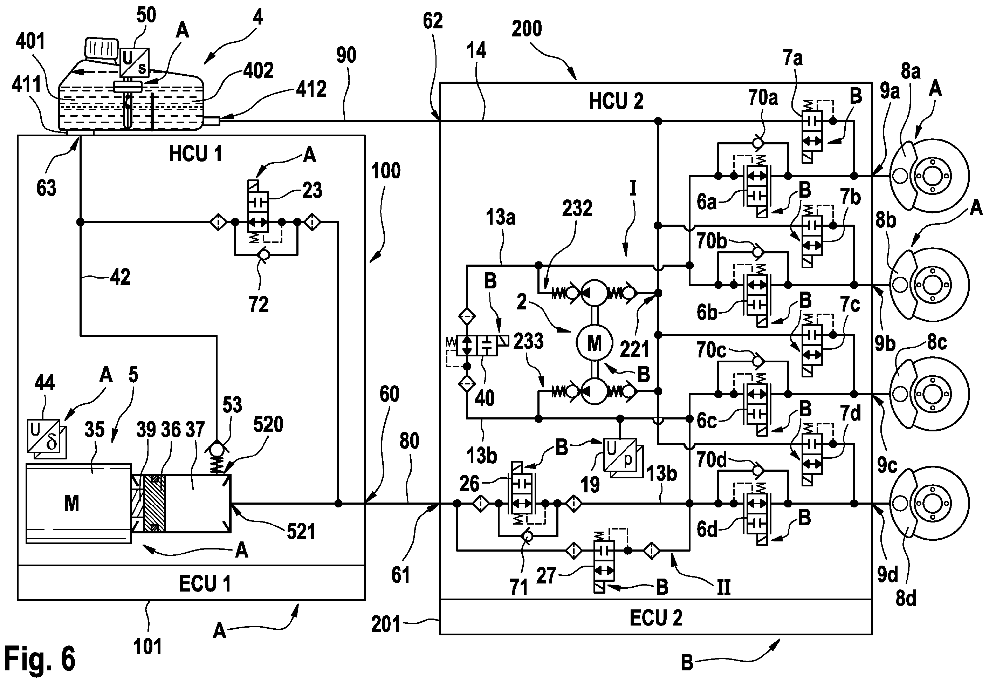

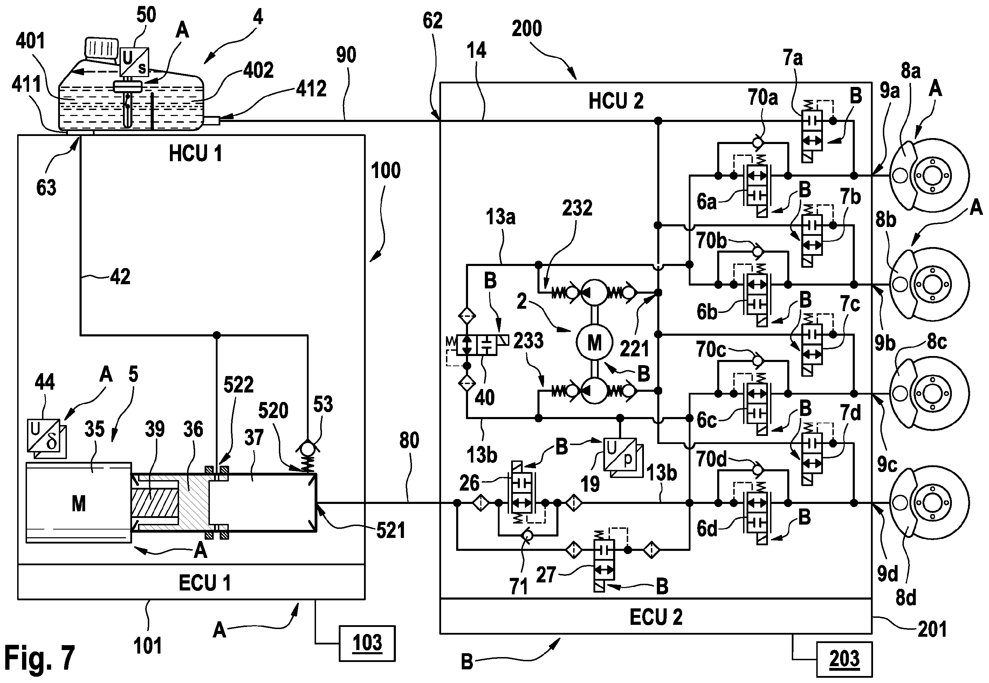

Gemäß weiterer bevorzugter Ausführungsbeispiele der erfindungsgemäßen Bremsanlage (siehe z.B. Fig. 6 und 7) ist die zweite Druckquelle 2 zweikreisig ausgeführt, insbesondere als eine Zwei-Kolben-Pumpe. Dabei bleiben die beiden Saugseiten verbunden (Sauganschluss 221) und sind mit der Rücklaufleitung 14 verbunden. Die zwei Druckseiten sind nicht zusammengeschaltet. Eine der Druckseiten (Druckanschluss 232) ist mit dem ersten Leitungsabschnitt 13a verbunden, die andere Druckseite (Druckanschluss 233) ist mit dem zweiten Leitungsabschnitt 13b verbunden. Diese Ausführung der Druckquelle 2 ist in allen bisher beschriebenen Ausführungsbeispielen möglich. Diese Ausführung hat den Vorteil, dass auch nach Ausfall der ersten Partition A (z.B. der ersten elektronischen Steuervorrichtung 101) ein zweikreisiger Betrieb möglich ist, d.h. dass beide Leitungsabschnitte 13a und 13b mittels der Druckquelle 2 mit Druck beaufschlagt werden können. Ein Nachteil ist die verminderte Druckaufbaudynamik im Leitungsabschnitt 13a bei zweikreisigem Betrieb. Beispielhaft sind in Fig. 6 und 7 entsprechende Ausführungsbeispiele ausgehend von den Bremsanlagen der Fig. 3 und 5 dargestellt.

In Fig. 8 ist ein weiteres Ausführungsbeispiel einer erfindungsgemäßen Bremsanlage dargestellt. Die Unterschiede zum ersten Ausführungsbeispiel der Fig. 1 werden im Folgenden beschrieben.

Die erste Baueinheit 100 (bzw. Ventilblock HCU1) umfasst neben der ersten Druckquelle 5 und deren (Nachsaug)Leitung 42 mit dem Rückschlagventil 53 ein stromlos geschlossen ausgeführtes Trennventil 26, welches von der ersten elektronischen Steuervorrichtung 101 angesteuert wird. Die hydraulische Verbindung mit den Ventilen 23, 72 zwischen Leitungsabschnitt 38 und 42 entfallen, die Druckquelle 5 umfasst keine Schnüffellöcher. Trennventil 26 ist hydraulisch zwischen der Druckquelle 5 und dem Leitungsabschnitt 13b der Bremsversorgungsleitung 13, nämlich zwischen der Druckquelle 5 und dem Anschluss 60 der ersten Baueinheit 100, angeordnet.

Die zweite Baueinheit 200 (bzw. Ventilblock HCU2) umfasst neben der zweiten Druckquelle 2 und den Einlass- und Auslassventilen 6a-6d, 7a-7d und dem Kreistrennventil 40, welche von der zweiten elektronischen Steuervorrichtung 201 angesteuert werden, ein stromlos offen ausgeführtes Trennventil 28, welches der Druckquelle 2 parallelgeschaltet ist, also die Saugseiten der Druckquelle 2 mit den Druckseiten der Druckquelle 2 verbindet bzw. die Rücklaufleitung 14 mit dem Leitungsabschnitt 13a verbindet. Trennventil 28 ist ein in Richtung des Druckmittelvorratsbehälters 4 (der Rücklaufleitung 14) schließendes Rückschlagventil 29 parallelgeschaltet. Trennventil 28 ist bevorzugt als Analogventil ausgeführt. Trennventil 28 ist doppelt ansteuerbar ausgeführt, d.h. es umfasst zwei getrennte, elektrisch unabhängige Betätigungsspulen, wobei die eine Spule von der ersten elektronischen Steuervorrichtung 101 angesteuert wird (Partition A) und die andere Spule von der zweiten elektronischen Steuervorrichtung 201 angesteuert wird (Partition B).

Die Aufteilung der beispielsgemäßen Bremsanlagen in zwei Baueinheiten bietet gegenüber einer Realisierung in nur einer Baueinheit den Vorteil, dass beide Baueinheiten jeweils kleiner und leichter und deshalb einfacher zu handhaben sind. Sie können auch einfacher auf vorhandenen Produktionsanlagen hergestellt werden. Bei einer Aufteilung in zwei Baueinheiten führt jede hydraulische Verbindung zwischen diesen Baueinheiten zu Mehraufwand und zusätzlichen Kosten. Es ist daher vorteilhaft, die Anzahl der hydraulischen Verbindungen möglichst klein zu halten.

Außerdem ist es vorteilhaft, die verschiedenen Funktionen von hydraulischen Verbindungen möglichst klar zu trennen. Verbindungen, über die Druckmittel angesaugt wird, sollen einen möglichst kleinen hydraulischen Widerstand und deshalb einen möglichst großen Durchmesser haben. Dafür ist es vorteilhaft, wenn erreicht wird, dass solche Verbindungen nicht druckfest sein müssen. Umgekehrt sollten drucktragende Verbindungen keine Ansaugfunktion haben.

Die Wahl und Anordnung der elektrisch betätigbaren Ventile, die elektronische Partitionierung und insbesondere die Zuordnung zwischen elektrisch betätigbaren Ventilen und elektronischen Steuervorrichtungen ermöglichen diese vorteilhaften Eigenschaften der hydraulischen Verbindungen der beiden Baueinheiten. Es ermöglicht, dass die beiden Baueinheiten neben den drucklosen bzw. nicht-druckfesten Verbindungen zum Druckmittelvorratsbehälter nur eine druckfeste Verbindung, die sie hydraulisch untereinander verbindet, benötigen. Die mindestens vier Verbindungen zwischen der zweiten Baueinheit 200 (bzw. den Radanschlüsse (9a-9d)) und den Radbremsen 8a-8d sind ebenfalls druckfeste Verbindungen.

## Patentansprüche

1. Bremsanlage für ein Kraftfahrzeug für zumindest vier hydraulisch betätigbare Radbremsen (8a-8d), umfassend eine erste Baueinheit (100), in welcher eine erste elektrisch betätigbare Druckquelle (5) angeordnet ist, eine zweite Baueinheit (200), in welcher eine zweite elektrisch betätigbare Druckquelle (2), ein elektrisch betätigbares Einlassventil (6a-6d) je Radbremse und ein elektrisch betätigbares Auslassventil (7a-7d) je Radbremse angeordnet ist, und einen Druckmittelvorratsbehälter (4), wobei die erste Druckquelle (5) sowie die zweite Druckquelle (2) mit einer Bremsversorgungsleitung (13) verbunden sind, an welche die zumindest vier Einlassventile (6a-6d) angeschlossen sind, **dadurch gekennzeichnet, dass** die erste Baueinheit (100) und die zweite Baueinheit (200) durch höchstens ein druckfestes hydraulisches Verbindungselement (80) miteinander verbunden sind.

2. Bremsanlage nach Anspruch 1, **dadurch gekennzeichnet, dass** die erste Druckquelle (5) über ein elektrisch betätigbares erstes Trennventil (26) mit der Bremsversorgungsleitung (13) verbunden ist, wobei das erste Trennventil (26) in der zweiten Baueinheit (200) angeordnet ist.

3. Bremsanlage nach Anspruch 1 oder 2, **dadurch gekennzeichnet, dass** die erste Druckquelle (5) über ein elektrisch betätigbares zweites Trennventil (23) mit dem Druckmittelvorratsbehälter (4) verbunden ist, wobei das zweite Trennventil (23) in der ersten Baueinheit (100) angeordnet ist.

4. Bremsanlage nach einem der vorhergehenden Ansprüche, **dadurch gekennzeichnet, dass** ein elektrisch betätigbares, insbesondere stromlos offenes, Kreistrennventil (40) in der Bremsversorgungsleitung (13) derart angeordnet ist, dass bei geschlossenem Kreistrennventil (40) die Bremsversorgungsleitung (13) in einen ersten Leitungsabschnitt (13a) und einen zweiten Leitungsabschnitt (13b) hydraulisch getrennt wird, wobei der erste Leitungsabschnitt (13a) mit der zweiten Druckquelle (2) und zumindest zwei der zumindest vier Einlassventilen (6a, 6b) hydraulisch verbunden ist und der zweite Leitungsabschnitt (13b) mit der ersten Druckquelle (5) und den anderen, insbesondere zumindest zwei, der zumindest vier Einlassventilen (6c, 6d) hydraulisch verbunden ist, wobei das Kreistrennventil (40) in der zweiten Baueinheit (200) angeordnet ist.

5. Bremsanlage nach einem der vorhergehenden Ansprüche, **dadurch gekennzeichnet, dass** die erste Baueinheit (100) zumindest einen ersten hydraulischen Anschluss (63) zur Verbindung mit dem Druckmittelvorratsbehälter (4) und einen zweiten hydraulischen Anschluss (60) zur Verbindung mit der zweiten Baueinheit (200) umfasst, wobei der zweite hydraulische Anschluss (60) mit dem druckfesten hydraulischen Verbindungselement (80) verbunden ist.

6. Bremsanlage nach einem der vorhergehenden Ansprüche, **dadurch gekennzeichnet, dass** die zweite Baueinheit (200) zumindest vier hydraulische Radanschlüsse (9a-9d) zur Verbindung mit den Radbremsen (8a-8d), einen ersten hydraulischen Anschluss (62) zur Verbindung mit dem Druckmittelvorratsbehälter (4) und einen zweiten hydraulischen Anschluss (61) zur Verbindung mit der ersten Baueinheit (100) umfasst, wobei der zweite hydraulische Anschluss (61) mit dem druckfesten hydraulischen Verbindungselement (80) verbunden ist.

7. Bremsanlage nach Anspruch 6, **dadurch gekennzeichnet, dass** die zweite Baueinheit (200) keinen weiteren hydraulischen Anschluss umfasst.

8. Bremsanlage nach einem der vorhergehenden Ansprüche, **dadurch gekennzeichnet, dass** der erste hydraulische Anschluss (63) der ersten Baueinheit (100) und der erste hydraulische Anschluss (62) der zweiten Baueinheit (200) mit unterschiedlichen Kammern (401, 402) des Druckmittelvorratsbehälters (4) verbunden sind.

9. Bremsanlage nach einem der vorhergehenden Ansprüche, **dadurch gekennzeichnet, dass** die zweite Druckquelle (2) saugseitig ohne Zwischenschaltung eines elektrisch betätigbaren Ventils, insbesondere über den ersten hydraulischen Anschluss (62) der zweiten Baueinheit (200) und eine mit dem ersten hydraulischen Anschluss verbundene hydraulische Verbindungsleitung (90), mit dem Druckmittelvorratsbehälter (4) verbunden ist.

10. Bremsanlage nach einem der vorhergehenden Ansprüche, **dadurch gekennzeichnet, dass** diese neben der ersten und zweiten Druckquelle (2, 5) kein weitere Druckquelle zum Aufbau eines Bremsdruckes zur Betätigung der Radbremsen umfasst.

11. Bremsanlage nach einem der vorhergehenden Ansprüche, **dadurch gekennzeichnet, dass** die erste Baueinheit (100) eine erste elektronische Steuervorrichtung (101) umfasst, welche die erste Druckquelle (5) ansteuert.

12. Bremsanlage nach Anspruch 11, rückbezogen auf Anspruch 3, **dadurch gekennzeichnet, dass** das zweite Trennventil (23) von der ersten elektronischen Steuervorrichtung (101) angesteuert wird.

13. Bremsanlage nach einem der vorhergehenden Ansprüche, **dadurch gekennzeichnet, dass** die zweite Baueinheit (200) eine zweite elektronische Steuervorrichtung (201) umfasst, welche die zweite Druckquelle (2) und die Einlass- und Auslassventile (6a-6d, 7a-7d) ansteuert.

14. Bremsanlage nach Anspruch 13, rückbezogen auf Anspruch 4, **dadurch gekennzeichnet, dass** das Kreistrennventil (40) von der zweiten elektronischen Steuervorrichtung (201) angesteuert wird.

15. Bremsanlage nach Anspruch 13 oder 14, rückbezogen auf Anspruch 2,
**dadurch gekennzeichnet, dass** das erste Trennventil (26) von der zweiten elektronischen Steuervorrichtung (201) angesteuert wird.

## Claims

1. A brake system for a motor vehicle for at least four hydraulically actuable wheel brakes (8a-8d), comprising a first assembly (100), in which a first electrically actuable pressure source (5) is arranged, a second assembly (200), in which a second electrically actuable pressure source (2), an electrically actuable inlet valve (6a-6d) for each wheel brake, and an electrically actuable outlet valve (7a-7d) for each wheel brake are arranged, and a pressure medium reservoir (4), wherein the first pressure source (5) and the second pressure source (2) are connected to a brake supply line (13), to which the at least four inlet valves (6a-6d) are connected, **characterized in that** the first assembly (100) and the second assembly (200) are connected to one another by at most one pressure-resistant hydraulic connecting element (80).

2. The brake system as claimed in claim 1, **characterized in that** the first pressure source (5) is connected to the brake supply line (13) via an electrically actuatable first separation valve (26), wherein the first separation valve (26) is arranged in the second assembly (200).

3. The brake system as claimed in claim 1 or 2, **characterized in that** the first pressure source (5) is connected via an electrically actuable second separation valve (23) to the pressure medium reservoir (4), wherein the second separation valve (23) is arranged in the first assembly (100).

4. The brake system as claimed in any one of the preceding claims, **characterized in that** an electrically actuable, in particular normally open, circuit separation valve (40) is arranged in the brake supply line (13) in such a manner that, when the circuit separation valve (40) is closed, the brake supply line (13) is hydraulically separated into a first line section (13a) and a second line section (13b), wherein the first line section (13a) is hydraulically connected to the second pressure source (2) and to at least two of the at least four inlet valves (6a, 6b), and the second line section (13b) is hydraulically connected to the first pressure source (5) and to the other inlet valves, in particular to at least two of the at least four inlet valves (6c, 6d), wherein the circuit separation valve (40) is arranged in the second assembly (200).

5. The brake system as claimed in any one of the preceding claims, **characterized in that** the first assembly (100) comprises at least one first hydraulic port (63) for connection to the pressure medium reservoir (4) and one second hydraulic port (60) for connection to the second assembly (200), wherein the second hydraulic port (60) is connected to the pressure-resistant hydraulic connecting element (80).

6. The brake system as claimed in any one of the preceding claims, **characterized in that** the second assembly (200) comprises at least four hydraulic wheel ports (9a-9d) for connection to the wheel brakes (8a-8d), a first hydraulic port (62) for connection to the pressure medium reservoir (4), and a second hydraulic port (61) for connection to the first assembly (100), wherein the second hydraulic port (61) is connected to the pressure-resistant hydraulic connecting element (80).

7. The brake system as claimed in claim 6, **characterized in that** the second assembly (200) does not comprise a further hydraulic port.

8. The brake system as claimed in any one of the preceding claims, **characterized in that** the first hydraulic port (63) of the first assembly (100) and the first hydraulic port (62) of the second assembly (200) are connected to different chambers (401, 402) of the pressure medium reservoir (4).

9. The brake system as claimed in any one of the preceding claims, **characterized in that** the second pressure source (2) is connected to the pressure medium reservoir (4) on the suction side without the interposition of an electrically actuatable valve, in particular via the first hydraulic port (62) of the second assembly (200) and a hydraulic connecting line (90) connected to the first hydraulic port.

10. The brake system as claimed in any one of the preceding claims, **characterized in that**, in addition to the first and second pressure source (2, 5), the brake system does not comprise a further pressure source for building up a brake pressure for actuating the wheel brakes.

11. The brake system as claimed in any one of the preceding claims, **characterized in that** the first assembly (100) comprises a first electronic control device (101) which actuates the first pressure source (5).

12. The brake system as claimed in claim 11, referring back to claim 3,
**characterized in that** the second separation valve (23) is actuated by the first electronic control device (101).

13. The brake system as claimed in any one of the preceding claims, **characterized in that** the second assembly (200) comprises a second electronic control device (201) which actuates the second pressure source (2) and the inlet and outlet valves (6a-6d, 7a-7d).

14. The brake system as claimed in claim 13, referring back to claim 4,
**characterized in that** the circuit separation valve (40) is actuated by the second electronic control device (201).

15. The brake system as claimed in claim 13 or 14, referring back to claim 2, **characterized in that** the first separation valve (26) is actuated by the second electronic control device (201).

## Revendications

1. Système de freinage pour un véhicule à moteur pour au moins quatre freins de roue (8a-8d) à commande hydraulique, comprenant une première unité structurelle (100) dans laquelle est disposée une première source de pression (5) à commande électrique, une seconde unité structurelle (200) dans laquelle sont disposées une seconde source de pression (2) à commande électrique, une soupape d'admission (6a-6d) à commande électrique pour chaque frein de roue et une soupape d'échappement (7a-7d) à commande électrique pour chaque frein de roue, et un réservoir de fluide sous pression (4), dans lequel la première source de pression (5) et la seconde source de pression (2) sont reliées à une conduite d'alimentation de frein (13), à laquelle sont raccordées les au moins quatre soupapes d'admission (6a-6d), **caractérisé en ce que** la première unité structurelle (100) et la seconde unité structurelle (200) sont reliées entre elles par au plus un élément de liaison hydraulique (80) résistant à la pression.

2. Système de freinage selon la revendication 1, **caractérisé en ce que** la première source de pression (5) est reliée à la conduite d'alimentation de frein (13) par l'intermédiaire d'une première soupape d'isolement (26) à commande électrique, dans lequel la première soupape d'isolement (26) est disposée dans la seconde unité structurelle (200).

3. Système de freinage selon la revendication 1 ou 2, **caractérisé en ce que** la première source de pression (5) est reliée au réservoir de fluide sous pression (4) par l'intermédiaire d'une seconde soupape d'isolement (23) à commande électrique, dans lequel la seconde soupape d'isolement (23) est disposée dans la première unité structurelle (100).

4. Système de freinage selon l'une des revendications précédentes, **caractérisé en ce qu'**une soupape d'isolement de circuit (40) à commande électrique, notamment ouverte hors tension, est disposée dans la conduite d'alimentation de frein (13) de telle sorte que, lorsque la soupape d'isolement de circuit (40) est fermée, la conduite d'alimentation de frein (13) est séparée hydrauliquement en un premier tronçon de la conduite (13a) et un second tronçon de la conduite (13b), dans lequel le premier tronçon de conduite (13a) est relié hydrauliquement à la seconde source de pression (2) et à au moins deux des au moins quatre soupapes d'admission (6a, 6b) et le second tronçon de conduite (13b) est relié hydrauliquement à la première source de pression (5) et à l'autre, notamment au moins deux, des au moins quatre soupapes d'admission (6c, 6d), dans lequel la soupape d'isolement de circuit (40) est disposée dans la seconde unité structurelle (200).

5. Système de freinage selon l'une quelconque des revendications précédentes, **caractérisé en ce que** la première unité structurelle (100) comprend au moins un premier raccord hydraulique (63) pour le raccordement au réservoir de fluide sous pression (4) et un second raccord hydraulique (60) pour le raccordement à la seconde unité structurelle (200), dans lequel le second raccord hydraulique (60) est relié à l'élément de raccordement hydraulique résistant à la pression (80).

6. Système de freinage selon l'une quelconque des revendications précédentes, **caractérisé en ce que** la seconde unité structurelle (200) comprend au moins quatre raccords de roue hydrauliques (9a-9d) pour le raccordement aux freins de roue (8a-8d), un premier raccord hydraulique (62) pour le raccordement au réservoir de fluide sous pression (4) et un second raccord hydraulique (61) pour le raccordement à la première unité structurelle (100), dans lequel le second raccord hydraulique (61) est relié à l'élément de liaison hydraulique résistant à la pression (80).

7. Système de freinage selon la revendication 6, **caractérisé en ce que** la seconde unité structurelle (200) ne comprend pas d'autre raccordement hydraulique.

8. Système de freinage selon l'une quelconque des revendications précédentes, **caractérisé en ce que** le premier raccord hydraulique (63) de la première unité structurelle (100) et le premier raccord hydraulique (62) de la seconde unité structurelle (200) sont reliés à des chambres différentes (401, 402) du réservoir de fluide sous pression (4).

9. Système de freinage selon l'une quelconque des revendications précédentes, **caractérisé en ce que** la seconde source de pression (2) est reliée côté aspiration au réservoir de fluide sous pression (4) sans interposition d'une soupape à commande électrique, notamment par l'intermédiaire du premier raccord hydraulique (62) de la seconde unité structurelle (200) et d'une conduite de raccordement hydraulique (90) reliée au premier raccord hydraulique.

10. Système de freinage selon l'une quelconque des revendications précédentes, **caractérisé en ce qu'**il ne comprend pas, outre la première et la seconde source de pression (2, 5), d'autre source de pression pour établir une pression de freinage destinée à actionner les freins de roue.

11. Système de freinage selon l'une quelconque des revendications précédentes, **caractérisé en ce que** la première unité structurelle (100) comprend un premier dispositif de commande électronique (101), lequel commande la première source de pression (5).

12. Système de freinage selon la revendication 11, lorsqu'elle dépend de la revendication 3, **caractérisé en ce que** la seconde soupape d'isolement (23) est commandée par le dispositif de commande électronique (101).

13. Système de freinage selon l'une quelconque des revendications précédentes, **caractérisé en ce que** la seconde unité structurelle (200) comprend un second dispositif de commande électronique (201), lequel commande la première source de pression (2) et les soupapes d'admission et d'échappement (6a-6d, 7a-7d).

14. Système de freinage selon la revendication 13, lorsqu'elle dépend de la revendication 4, **caractérisé en ce que** la soupape d'isolement de circuit (40) est commandée par le second dispositif de commande électronique (201).

15. Système de freinage selon la revendication 13 ou 14, lorsqu'elle dépend de la revendication 2, **caractérisé en ce que** la soupape d'isolement (26) est commandée par le second dispositif de commande électronique (201).
